(19) Europäisches Patentamt
European Patent Office
Office européen des brevets

(11) **EP 3 736 601 B1**

(12) **EUROPÄISCHE PATENTSCHRIFT**

(45) Veröffentlichungstag und Bekanntmachung des Hinweises auf die Patenterteilung:
**01.12.2021 Patentblatt 2021/48**

(21) Anmeldenummer: **20165251.8**

(22) Anmeldetag: **24.03.2020**

(51) Int Cl.:
**G01S 7/48** (2006.01)     **G01S 7/4915** (2020.01)
**G01S 17/36** (2006.01)     **G01B 11/02** (2006.01)
**G01B 11/00** (2006.01)     **G01S 7/481** (2006.01)
G01S 7/493 (2006.01)     G01S 17/42 (2006.01)

(54) **OPTOELEKTRONISCHE BESTIMMUNG DER ENTFERNUNG EINES OBJEKTS UNTER BERÜCKSICHTIGUNG VON KANTENTREFFERN**

OPTO-ELECTRIC DETERMINIATION OF THE DISTANCE OF AN OBJECT TAKING INTO ACCOUNT EDGE HITS

DÉTERMINATION OPTOÉLECTRIQUE DE LA DISTANCE D'UN OBJET EN COMPTE DE BORD DE CHOC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.05.2019 DE 102019112300**

(43) Veröffentlichungstag der Anmeldung:
**11.11.2020 Patentblatt 2020/46**

(73) Patentinhaber: **SICK AG
79183 Waldkirch (DE)**

(72) Erfinder:
• **Gimpel, Hartmut
78467 Konstanz (DE)**
• **Honal, Matthias
79299 Wittnau (DE)**

(56) Entgegenhaltungen:
**US-A- 5 216 236     US-A1- 2007 103 699
US-A1- 2018 210 070**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen optoelektronischen Sensor und ein Verfahren zur Bestimmung der Entfernung eines Objekts in einem Überwachungsbereich nach dem Oberbegriff von Anspruch 1 beziehungsweise 11.

Viele optoelektronische Sensoren arbeiten nach dem Tastprinzip, bei dem ein Lichtstrahl in den Überwachungsbereich ausgesandt und der von Objekten zurückgeworfene Lichtstrahl wieder empfangen wird, um dann das Empfangssignal elektronisch auszuwerten. Dabei wird oft die Lichtlaufzeit gemessen, um den Abstand eines angetasteten Objekts zu bestimmen. Diese Art der Abstandsmessung wird auch als ToF (Time of Flight) oder LIDAR (Light Detection and Ranging) bezeichnet.

Um den Messbereich zu erweitern, kann der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst. In den meisten Laserscannern wird die Abtastbewegung durch einen Drehspiegel erreicht. Es ist aber auch bekannt, stattdessen den gesamten Messkopf mit Lichtsendern und Lichtempfängern rotieren zu lassen, wie dies beispielsweise in DE 197 57 849 B4 beschrieben ist.

Bei der Lichtlaufzeitmessung wird zwischen den puls- und den phasenbasierten Verfahren unterschieden. Bei einem Pulsverfahren wird unmittelbar die Lichtlaufzeit eines Lichtpulses oder einer Folge von Lichtpulsen gemessen, weshalb dieses Verfahren auch als dToF (direct ToF) bekannt ist. Für hochpräzise Messungen insbesondere in einem Laserscanner, wie sie beispielsweise im Bereich der Volumenmessung benötigt werden, sind pulsbasierte Verfahren aber unter gegebenen Rahmenbedingungen hinsichtlich Kosten, Laserleistung, verfügbarer Bauteile und dergleichen weniger geeignet.

Deshalb sollen hier die Phasenverfahren genauer betrachtet werden. In einem Phasenverfahren, auch als cw-Messverfahren oder iToF (indirect ToF) bekannt, wird das Sendelicht periodisch moduliert, typischerweise mit einer Modulationsfrequenz in der Größenordnung von 100 MHz. Der Phasenversatz der Modulation in Sende- und Empfangslicht ist nach Multiplikation mit der bekannten Modulationswellenlänge die gesuchte Lichtlaufzeit. Allerdings hat das Phasenverfahren nur einen sehr kleinen Eindeutigkeitsbereich entsprechend einer halben Modulationswellenlänge, was beispielsweise bei 100 MHz lediglich 1,5 m bedeutet.

Um mit diesem Problem umzugehen, ist bekannt, das cw-Messverfahren mit mehreren Modulationsfrequenzen durchzuführen, die nacheinander in getrennten Messzyklen oder auch gleichzeitig auf das Messlicht aufmoduliert werden. Dann wird der Phasenversatz für jede Modulationsfrequenz bestimmt und daraus ein Abstandswert in einem vergrößerten Eindeutigkeitsbereich berechnet. Für den Spezialfall von zwei Modulationsfrequenzen $f_0$, $f_1$ entspricht der vergrößerte Eindeutigkeitsbereich demjenigen einer synthetischen Differenzfrequenz $f_0 - f_1$.

Eine Messsituation, die bei Lichtlaufzeitmessungen zu erheblichen Fehlern führt, sind sogenannte Kantentreffer. Dabei fällt der Lichtfleck des Sendelichtstrahls nur mit einem Teilquerschnitt auf eine bestimmte Objektfläche, während das übrige Licht an dieser Objektfläche vorbei auf eine möglicherweise wesentlich weiter entfernte Objektfläche trifft. Das Empfangssignal entspricht dann einer Mischung zweier unterschiedlicher Entfernungsmessungen.

Bei einem Pulsverfahren lösen die Teilreflexionen an den beiden Objektflächen in unterschiedlichem Abstand im günstigsten Fall im Empfangssignal unterscheidbare Echos aus. Dann ist der Kantentreffer erkennbar beziehungsweise eine Mehrechoauswertung mit Entfernungswerten zu beiden Objektflächen möglich. Bei relativ geringem Abstand der beiden Objektflächen verschmelzen die Echos aber bereits, so dass die Trennung nicht mehr möglich ist.

Unabhängig davon, wie gut ein Pulsverfahren womöglich Kantentreffer erkennen und auswerten könnte, ist das Unterscheiden mehrerer Echos jedenfalls nicht auf ein Phasenverfahren übertragbar. Somit ist es bisher nicht möglich, die höhere Genauigkeit des Phasenverfahrens auszunutzen, ohne auch die in der Regel fehlerhaften Messwerte bei Kantentreffern hinzunehmen.

Die US2018/0210070 A1 offenbart eine aktive helligkeitsbasierte Strategie zur Prüfung von Pixeln in einer lichtlaufbasierten Tiefenmessung. Dabei werden Phasen und Amplituden für unterschiedliche Frequenzen gemessen und die Amplituden miteinander verglichen. Bei zu großer Abweichung, die durch Mehrwegeausbreitung oder Bewegungsunschärfe verursacht sein kann, wird das betroffene Pixel ungültig gesetzt.

Die US 5216236 befasst sich mit einem optischen Verfolgungssystem. Mit einem LiDAR-Scanner wird ein Lissajous-Muster abgetastet, um Objektkanten zu finden, nämlich dort, wo sich die gemessene Laufzeit sprunghaft ändert.

Aus der US 2007/0103699 A1 ist ein Messsystem mit mehreren, insbesondere zwei zueinander kreuzförmig angeordneten gefächerten Laserstrahlen bekannt. Die beiden Laserstrahlen werden durch Wellenlänge und Modulationsfrequenz unterscheidbar gemacht. Wenn während des Scannens ein gefächerter Laserstrahl ein Objekt überstreicht, so fällt zunächst ein Teil des Lichts, dann das gesamte Licht und schließlich wieder nur ein Teil des Lichts auf das Objekt. Dieser zeitliche Amplitudenverlauf wird genutzt, um einen Schwerpunkt des Signals aufzufinden.

Es ist daher Aufgabe der Erfindung, die Lichtlaufzeitmessung mit einem Phasenverfahren zu verbessern.

Diese Aufgabe wird durch einen optoelektronischen Sensor und ein Verfahren zur Bestimmung der Entfernung eines Objekts in einem Überwachungsbereich nach Anspruch 1 beziehungsweise 11 gelöst. In dem Sensor erzeugt ein Lichtsender Sendelicht, das mit mindestens einer ersten Frequenz und einer zweiten Frequenz moduliert ist. Die Modulation mit unterschiedlichen Frequenzen ist nacheinander in unterschiedlichen Messzyklen oder gleichzeitig möglich. Das Sendelicht wird als remittiertes Sendelicht wieder empfangen, nachdem es zumindest teilweise im Überwachungsbereich von einem Objekt zurückgeworfen wurde. Anhand des entsprechenden Empfangssignals eines Lichtempfängers bestimmt eine Steuer- und Auswertungseinheit den Phasenversatz für die jeweilige Frequenz. Aus dem somit mehrfach bestimmten Phasenversatz wird eine Lichtlaufzeit in einem vergrößerten Eindeutigkeitsbereich entsprechend dem einleitend diskutierten Phasenverfahren mit mehreren Frequenzen ermittelt, die in eine Entfernung zum angetasteten Objekt umgerechnet werden kann.

Die Erfindung geht von dem Grundgedanken aus, nicht nur die Phase, sondern auch die Amplitude für die jeweiligen Modulationsfrequenzen auszunutzen, um Kantentreffer zu erkennen. Dazu wird aus dem Empfangssignal auch die Amplitude zu den jeweiligen Modulationsfrequenzen bestimmt. Bei einem Kantentreffer weichen nämlich die Amplituden voneinander ab, wie später noch erläutert wird. Daher kann bei mehr als rauschbedingten Unterschieden der Amplituden ein Kantentreffer angenommen werden. Dabei bedeutet Kantentreffer, wie einleitend schon eingeführt, dass das Sendelicht jeweils mit einem Teilquerschnitt auf Objektflächen in unterschiedlichen Entfernungen fällt, insbesondere sprunghaft und deutlich unterschiedlichen Entfernungen. Damit wird letztlich die Lichtlaufzeit bei einem Kantentreffer als unbestimmter Mischwert gemessen, und erfindungsgemäß wird dieser Fall erkannt.

Die Erfindung hat den Vorteil, dass Kantentreffer, die ansonsten fehlerhafte Entfernungsmesswerte liefern, erkannt und dadurch gesondert behandelt oder verworfen werden können. Somit sind die gemessenen Entfernungen genauer und enthalten weniger systematische Messfehler. Dementsprechend werden auch Lage und Dimensionen der vermessenen Objekte genauer bestimmt, beispielsweise bei der Volumenvermessung von Objekten. Insbesondere werden Objektkanten genauer lokalisiert, die häufig sogar besonders wichtige Messinformationen darstellen. Die Häufigkeit von Fehlmessungen sinkt. Ohne Erkennung von Kantentreffern ist herkömmlich eine Filterung der Messwerte erforderlich, die wiederum Messartefakte erzeugt. Eine solche Filterung wird erfindungsgemäß überflüssig, da die Kantentreffer bereits erkannt sind. Das vermeidet die genannten Messartefakte und vereinfacht die nachgelagerte Datenverarbeitung, weil bereits die Rohmessdaten eine höhere Verlässlichkeit aufweisen. Die genannten Punkte sind bei der Vermessung von kleinen Objekten von besonders großer Relevanz, da wegen der auf einem kleinen Objekt geringeren Anzahl von Messpunkten eine Filterung oft gar nicht möglich ist. Entsprechend ist der Fehler bei der Kanten- oder Objektgrößenbestimmung besonders hoch, wenn ein Kantentreffer bei einer kleinen Anzahl von Objektpunkten auftritt, und dieser Fehler wird erfindungsgemäß vermieden, weil der Kantentreffer als solcher erkannt wird.

Die Steuer- und Auswertungseinheit ist bevorzugt dafür ausgebildet, die Differenz der ersten Amplitude und der zweiten Amplitude mit einer Toleranzschwelle zu bewerten und/oder das Verhältnis der ersten Amplitude und der zweiten Amplitude zu bewerten. Die Toleranzschwelle ist vorzugsweise anhand des erwarteten oder gemessenen Rauschpegels gewählt, so dass mit ihr zwischen rauschbedingten und durch Kantentreffer verursachten Differenzen zwischen den Amplituden unterschieden werden kann. Eine Betrachtung des Verhältnisses der beiden Amplituden hat den Vorteil der Unabhängigkeit von den Absolutwerten der Amplituden, da sie in Zähler und Nenner zugleich eingehen.

Die Steuer- und Auswertungseinheit ist bevorzugt dafür ausgebildet, einen Quotienten aus Standardabweichung und Mittelwert der Amplituden zu bewerten. Das ist ein weiteres denkbares Kriterium, um rauschbedingte und systematische, durch Kantentreffer verursachte Unterschiede in den Amplituden zu erkennen. Dieses Kriterium hat den weiteren Vorteil, dass es ohne Weiteres auf mehr als zwei Frequenzen verallgemeinerbar ist.

Die Steuer- und Auswertungseinheit ist bevorzugt dafür ausgebildet, einen Signifikanzwert für die Erkennung eines Kantentreffers zu bestimmen. In derartigen vorteilhaften Ausführungsformen wird nicht nur digital entschieden, ob ein Kantentreffer vorliegt, sondern auch eine Signifikanzbewertung vorgenommen, wie verlässlich diese Entscheidung ist. Beispielsweise wird die Differenz zwischen den Amplituden, die Abweichung des Verhältnisses der Amplituden von Eins oder eine sonstige Maßfunktion beispielsweise auf Basis von Momenten einer Verteilung wie Mittelwert oder Standardabweichung herangezogen. Als weiteres Kriterium für die Signifikanzbewertung kann die Absolutamplitude herangezogen werden, denn wenn diese klein ist, fallen rauschbedingte Unterschiede umso stärker ins Gewicht. Bei kleiner Absolutamplitude kommt es demnach eher zu scheinbaren Kantentreffen aufgrund tatsächlich nur rauschbedingter Unterschiede.

Die Steuer- und Auswertungseinheit ist bevorzugt dafür ausgebildet, Entfernungswerte zu Kantentreffern zu verwerfen oder mit einer Zusatzinformation auszugeben. Werden die Kantentreffer direkt verworfen, so erhöht das deutlich die Qualität der verbleibenden Messwerte. Andererseits ist die in den Kantentreffern noch vorhandene Messinformation dann verloren. Daher kann auch den Entfernungswerten zu Kantentreffern eine Zusatzinformation mitgegeben werden, damit erst eine nachgelagerte Auswertung entscheidet, wie Kantentreffer behandelt werden.

Die Zusatzinformation ist bevorzugt eine binäre Markierung als Kantentreffer oder ein Signifikanzwert. Anhand einer binären Markierung kann die nachgelagerte Auswertung Kantentreffer grundsätzlich einer Sonderbehandlung unterziehen, sie beispielsweise verwerfen, anzeigen oder mit einem geringeren Gewicht berücksichtigen. Außerdem erleichtert oder ersetzt die Kenntnis über Kantentreffer eine nachgelagerte Kantenerkennung. Die binäre Markierung kann in den ausgegebenen Messwert codiert werden, um die Datenausgabe zu vereinfachen, etwa als höchst- oder niederwertigstes Bit im Messwert. Ein Signifikanzwert kann beispielsweise nachgelagert über eine Schwelle bewertet werden oder als Gewicht für statistische Auswertungen genutzt werden.

Die Steuer- und Auswertungseinheit ist bevorzugt dafür ausgebildet, Phasenversatz und Amplituden durch eine IQ-Demodulation zu bestimmen. Das Empfangssignal wird also mit einem Signal der ersten Frequenz beziehungsweise der zweiten Frequenz sowie einem dazu um 90° phasenverschobenen Signal der jeweiligen Frequenz gemischt. Das ist eine robuste Möglichkeit, um die Informationen in den jeweiligen Frequenzen empfangsseitig zurückzugewinnen. Alternativen sind aber auch denkbar, etwa besondere Pixel mit mehreren Ladungsspeichern, die zu bestimmten Phasen der jeweiligen Frequenz aktiv sind, oder eine angepasste Fourieranalyse.

Die Steuer- und Auswertungseinheit ist bevorzugt dafür ausgebildet, mit einer künstlichen ersten Frequenz und zweiten Frequenz unabhängig von der Trägerfrequenz des Sendelichts zu modulieren. In dieser Ausführungsform wird mit einem üblichen Phasen- oder cw-Verfahren gemessen. Die beiden Frequenzen sind künstliche Modulationsfrequenzen, die unabhängig von der Trägerfrequenz des Lichts und viele Größenordnungen kleiner sind. Für andere als diese bevorzugte Ausführungsform ist denkbar, dass die Modulation in der ersten Frequenz und der zweiten Frequenz in der Lichtfrequenz selbst erfolgt, so dass folglich ein Lichtsender mit veränderbarer Wellenlänge oder mehreren Lichtquellen unterschiedlicher Wellenlänge erforderlich ist. Ein derartiges kohärentes Messverfahren hat einen wesentlich kleineren inhärenten Eindeutigkeitsbereich, der durch verschiedene Ansätze wie die Verwendung mehrerer Frequenzen erweiterbar ist, und dafür eine wesentlich größere Messgenauigkeit im Bereich von Mikrometern und besser.

Der Sensor ist bevorzugt als Laserscanner mit einer beweglichen Ablenkeinheit zur periodischen Abtastung des Überwachungsbereichs mit dem Sendelicht sowie einer Winkelerfassungseinheit zur Bestimmung der jeweiligen Winkelstellung der Ablenkeinheit ausgebildet. Dabei sind verschiedenste Bauformen mit Drehspiegel, drehendem Messkopf, in dem sich Lichtsender und/oder Lichtempfänger mitdrehen, und auch mehrstrahlige Systeme denkbar. Im Laufe der Scanbewegung treten Kantentreffer fast unweigerlich auf, wenn sich der Abtaststrahl erstmals auf ein Objekt beziehungsweise von einem Objekt auf das nächste Objekt in Scanrichtung bewegt. Daher ist es besonders vorteilhaft, wenn Kantentreffer erkannt und angemessen behandelt werden.

Die Steuer- und Auswertungseinheit ist dafür ausgebildet, ein Objekt im Überwachungsbereich anhand eines erkannten Kantentreffers zu lokalisieren. Damit werden Kantentreffer nicht lediglich als minderwertige Messwerte mit unzuverlässigem Entfernungswert behandelt. Vielmehr wird die Erkenntnis, dass das Sendelicht eine Kante getroffen hat, selbst als wertvolle Messinformation ausgenutzt. Damit können Objekte genauer lokalisiert und vermessen werden. Besonders relevant ist das in einem Laserscanner. Werden dort herkömmlich Objekte anhand eines Sprungs in den gemessenen Entfernungen lokalisiert, so verwaschen die Kantentreffer mit ihrer unzuverlässigen Entfernungsinformation die Lage des Objekts in Scanrichtung. Manchmal wird der Kantentreffer als Sprung erkannt, manchmal nicht, so dass die auf die Scanrichtung bezogene Breite der Objekte systematisch über- oder unterschätzt wird. Ist jedoch erfindungsgemäß bekannt, an welchen Winkelpositionen es während des Scans zu Kantentreffern kommt, so wird die Lokalisierung entsprechend genauer.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1        eine schematische Darstellung eines optoelektronischen Sensors;

Fig. 2        eine schematische Darstellung eines Kantentreffers eines optoelektronischen Sensors;

Fig. 3a      eine Darstellung eines Vektors in der komplexen Ebene zur Erläuterung der Bestimmung von Phase und Amplitude eines Signals;

Fig. 3b      eine Darstellung ähnlich Figur 3a zur Erläuterung der Überlagerung zweier Signale;

Fig. 4a-b   eine Darstellung der Überlagerung der Empfangssignale bei einem Kantentreffer für zwei verschiedene Frequenzen $f_0$, $f_1$; und

Fig. 5        eine schematische Darstellung der Messpunkte eines Laserscanners an Objektkanten zur vergleichenden Erläuterung der Vermessung des Objekts mit und ohne Erkennung von Kantentreffern.

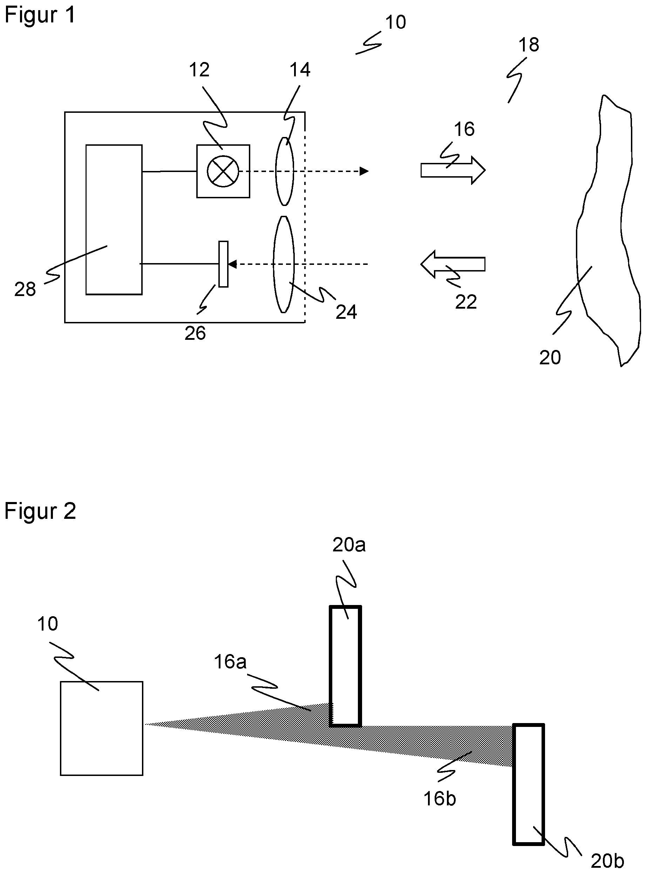

Figur 1 zeigt eine schematische Schnittdarstellung eines optoelektronischen Sensors10. Ein Lichtsender 12, beispielsweise ein Laser oder eine LED, sendet über eine Sendeoptik 14 Sendelicht 16 in einen Überwachungsbereich 18. Der Lichtsender 12 weist vorzugsweise eine Laserlichtquelle auf, insbesondere einen Halbleiterlaser in Form eines VCSEL-Lasers oder Kantenemitters, aber auch andere Lichtquellen wie LEDs sind denkbar.

Trifft das Sendelicht 16 in dem Überwachungsbereich 18 auf ein Objekt 20, so kehrt ein Teil des Lichts als remittiertes Sendelicht 22 zu dem Sensor 10 zurück und wird dort von einer Empfangsoptik 24 auf einen Lichtempfänger 26 gebündelt, beispielsweise eine PIN-Diode, eine APD (Avalanche Photo Diode, Lawinenphotodiode) oder eine Einzelphotonen-APD (SPAD, Single-Photon APD, Lawinenphotodiode im Geiger-Modus) beziehungsweise eine Mehrfachanordnung davon.

Eine Steuer- und Auswertungseinheit 28 steuert den Lichtsender 12 und wertet das Empfangssignal des Lichtempfängers 26 aus. Dabei wird die Lichtlaufzeit mit einem Phasenverfahren (cw-Verfahren, iTof) gemessen, wobei für eine Vergrößerung des Eindeutigkeitsbereichs das Sendelicht 16 mit mindestens zwei Frequenzen $f_0$, $f_1$ moduliert und der Phasenversatz des Empfangssignals in beiden Frequenzen bestimmt wird. Die Modulation erfolgt vorzugsweise mit einer künstlichen Frequenz beispielsweise im Bereich zwischen 0,3 und 300 MHz, wobei eine sinusförmige, rechteckförmige und prinzipiell jede andere periodische Modulation denkbar ist.

Erfindungsgemäß wird für jede der Modulationsfrequenzen nicht nur die Phase, sondern auch die Amplitude des Empfangssignals bestimmt. Anhand dieser Amplituden kann die Steuer- und Auswertungseinheit 28 Kantentreffer erkennen. Dies wird nachfolgend unter Bezugnahme auf die Figuren 2 bis 5 näher erläutert.

Der Grundaufbau des Sensors 10 gemäß Figur 1 ist nur beispielhaft zu verstehen. Es sind andere Anordnungen denkbar, beispielsweise ein koaxialer anstelle eines biaxialen Aufbaus, und auch andere Sensorarten als ein eindimensionaler Lichttaster, insbesondere ein Laserscanner. In einem Laserscanner wird das Sendelicht 16 als Abtaststrahl mit Hilfe eines Drehspiegels periodisch abgelenkt und tastet so eine Abtastebene in dem Überwachungsbereich 18 ab. Alternativ rotiert ein Messkopf mit Lichtsender 12 und Lichtempfänger 26. Die jeweilige Winkelstellung des Drehspiegels oder des Messkopfes wird mit einem Encoder oder dergleichen bestimmt, so dass aus Winkel und gemessener Entfernung Messpunkte in Polarkoordinaten entstehen. Anstelle des gezeigten einfachen Strahls des Sendelichts 16 sind auch mehrstrahlige Systeme möglich. Im Falle eines Laserscanners entstehen auf diese Weise mehrere Abtastebenen. Denkbar ist auch eine Ausführungsform des Sensors 10 als Lichtlaufzeitkamera mit einer Pixelmatrix als Lichtempfänger 26, wobei der Überwachungsbereich 18 flächig oder pixelweise mit einer Vielzahl von Lichtstrahlen gleichzeitig oder einem gesteuerten Lichtstrahl nacheinander beleuchtet wird.

Figur 2 zeigt schematisch einen sogenannten Kantentreffer. Das bedeutet, dass das Sendelicht 16 während derselben Messung zwei Objekte 20a-b zugleich trifft, nämlich ein näheres Objekt 20a und ein ferneres Objekt 20b. Das Sendelicht 16 wird gleichsam geteilt, ein Teilquerschnitt 16a fällt auf das nähere Objekt 20a und ein anderer Teilquerschnitt 16b auf das fernere Objekt 20b. Dementsprechend entsteht das Empfangssignal aus einer Überlagerung aus remittiertem Sendelicht 22 von dem näheren Objekt 20a und dem ferneren Objekt 20b. Solche Kantentreffer führen regelmäßig zu fehlerhaften Messwerten, wodurch die nachfolgende Datenweiterverarbeitung komplizierter wird und die finalen Messergebnisse verschlechtert werden. Erfindungsgemäß sollen Kantentreffer bei dem verwendeten Phasenverfahren mit mehreren Frequenzen erkannt werden.

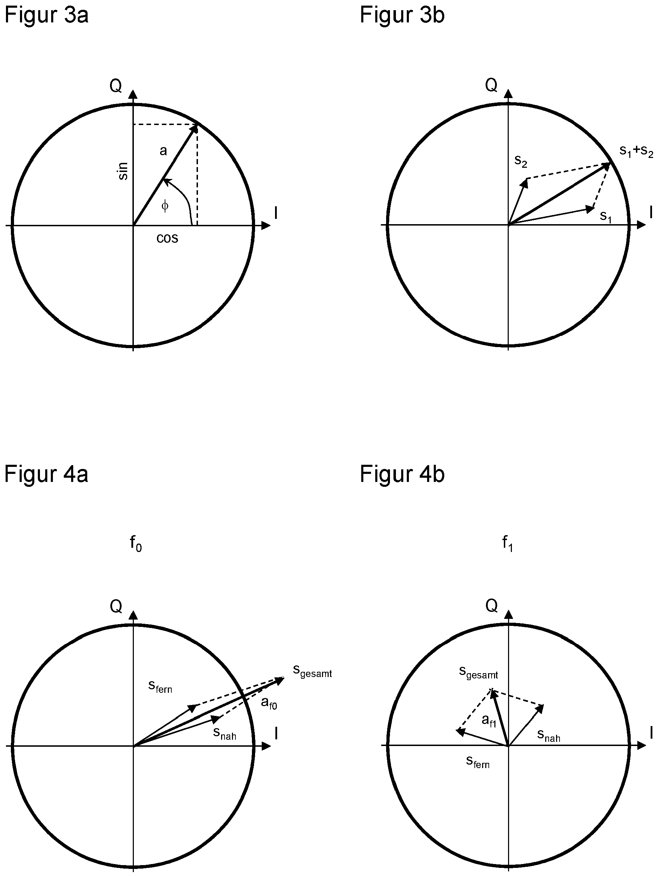

Figur 3a zeigt zur Erläuterung des allgemeinen mathematischen Hintergrunds die Darstellung eines sinusförmigen Signals in einem Zeigerdiagramm in der komplexen Ebene. Die beiden Achsen sind in Anlehnung an eine IQ-Modulation beschriftet. Ein Signal, das mit einer bestimmten Frequenz $f_i$ schwingt, kann durch seine Amplitude $a$ und seine Phase $\phi$ charakterisiert werden. Der jeweilige Anteil $I_{f_i}$ und $Q_{f_i}$ in den beiden Achsen entspricht $a \sin \phi$ beziehungsweise $a \cos \phi$.

Um diese Größen $a$, $\phi$ aus dem Empfangssignal je Frequenz $f_i$ zurückzugewinnen, kann ein IQ-Verfahren verwendet werden. Dazu wird das Empfangssignal mit dem entsprechenden Sendesignal sowie einem um 90° verschobenen Sendesignal gemischt, so dass nach anschließender Tiefpassfilterung die Größen $I_{f_i}$ und $Q_{f_i}$ erfasst sind. Damit lassen sich die Phasen und Amplituden berechnen als

$$\phi_{f_i} = \tan^{-1} \frac{Q_{f_i}}{I_{f_i}}$$

und

$$a_{f_i} = \sqrt{I_{f_i}^2 + Q_{f_i}^2}.$$

Diese Bestimmung von Phase und Amplitude ist vorteilhaft, aber nicht die einzige. Beispielsweise können alternativ die Phase und die Amplitude der gewünschten Frequenzen im Empfangssignal nach Digitalisierung mit einer Fouriertransformation errechnet werden. Denkbar sind weiterhin spezielle Empfangspixel, in denen die erzeugten Photoelektronen abhängig von der aktuellen Sendelichtphase in unterschiedlichen Ladungsspeichern gesammelt werden.

Figur 3b zeigt in einer Darstellung entsprechend Figur 3a die Überlagerung zweier Signale $s_1$, $s_2$ gleicher Frequenz $f_i$, aber unterschiedlicher Phase und Amplitude zu einem Summensignal $s_1+s_2$. Aus dem Summensignal $s_1+s_2$ lässt sich die Phasenlage der einzelnen Signale nicht mehr ohne Weiteres rekonstruieren. Wird ein solches Summensignal $s_1+s_2$ als einfaches sinusförmiges Signal interpretiert, können eine einzige Phasenlage und eine einzige Amplitude bestimmt werden, die jedoch im Allgemeinen nicht mehr der Phasenlage und der Amplitude eines der beiden Signale $s_1,s_2$ entsprechen.

Figur 4a-b zeigt die entsprechende Situation bei einem Kantentreffer, in der sich nämlich die zu Figur 3b beschriebene Überlagerung zweier Signale ergibt. Wie in Figur 2 gezeigt, legt dabei ein Teil 16a des Sendelichts einen anderen Weg zurück als der andere Teil 16b. Dementsprechend ist das Empfangssignal Sgesamt eine Überlagerung aus einem Signal $s_{nah}$ und einem Signal $s_{fern}$, in dem die gesuchte Phase ein Gemisch aus $\phi_{nah}$ und $\phi_{fern}$ ist. Für jede der beteiligten Frequenzen $f_0$ und $f_1$, wie in Figur 4a beziehungsweise Figur 4b gezeigt, entstehen jeweils Summensignale, aus denen sich die Werte $\phi_{nah}$ und $\phi_{fern}$ nicht mehr rekonstruieren lassen.

Nun entstehen aber in den Messungen mit den Modulationsfrequenzen $f_0$ und $f_1$ unterschiedliche Phasendifferenzen $\phi_{nah}$ und $\phi_{fern}$. Die Tatsache, dass für dieselbe Entfernung bei unterschiedlichen Messfrequenzen eine unterschiedliche Phasendifferenz entsteht, ist ja gerade der Grund, warum mit mehreren Frequenzen gemessen wird und so der Eindeutigkeitsbereich erweitert werden kann. Somit zeigen die Pfeile für $s_{nah}$ und $s_{fern}$ je nach Frequenz $f_0$ und $f_1$ in den Figuren 4a-b in unterschiedliche Winkel. Insbesondere ist damit der Winkelunterschied zwischen den Pfeilen bei der einen Frequenz fo entsprechend Figur 4a ein anderer bei der anderen Frequenz $f_1$ entsprechend Figur 4b. Bei der vektoriellen Addition ergeben sich trotz gleich langer einzelner Pfeile $s_{nah}$, $s_{fern}$ unterschiedlich lange resultierende Vektoren Sgesamt je nach Frequenz $f_0$ und $f_1$.

Als Ergebnis dieser Betrachtung lässt sich festhalten, dass bei einem Kantentreffer die Modulationsamplituden des Empfangslichts in den beiden Messfrequenzen fo, $f_1$ in der Regel unterschiedlich sind. Anhand dieses Amplitudenunterschieds können Kantentreffer detektiert werden. Ein Vorteil dieser Erkennung von Kantentreffern ist, dass sie auch funktioniert, wenn die mit dem Kantentreffer falsch bestimmte Entfernung innerhalb einer Messkontur keinen klaren Ausreißer bildet. Ein solcher Ausreißer könnte auch durch andere Mittel erkannt werden. Ein gewisser Messfehler dagegen bliebe durch bloße Betrachtung der Entfernung unerkannt, während die Erfindung den Kantentreffer trotzdem erkennt.

Dementsprechend vergleicht die Steuer- und Auswertungseinheit 28 für einen jeweils gemessenen Entfernungswert die zusätzlich zu den Phasen für die jeweilige Frequenz $f_i$ bestimmten Amplituden $a_{f_i}$ miteinander. Sofern sich dabei ein signifikanter Unterschied ergibt, liegt ein Kantentreffer vor. Das Ausmaß der Abweichung ermöglicht zugleich eine Aussage über die Verlässlichkeit der Erkennung des Kantentreffers.

Statt die Amplituden direkt miteinander zu vergleichen, beispielsweise deren Differenz mit einer Toleranzschwelle zu bewerten, kann deren Verhältnis

$$v := \frac{a_{f0}}{a_{f1}}$$

betrachtet werden. Dabei gilt, dass die Wahrscheinlichkeit für einen Kantentreffer umso höher liegt, je stärker das Amplitudenverhältnis von Eins abweicht. Bei gleichen Amplituden $a_{f0} = a_{f1}$ oder dem Verhältnis Eins wird angenommen, dass es keine Signalmischung und damit keinen Kantentreffer gab, wobei die theoretisch noch denkbare zufällige Übereinstimmung aufgrund von Rauscheffekten oder besonders ungünstigen Phasenlagen vernachlässigt wird.

Bei einem Phasenverfahren können durchaus auch mehr als zwei Modulationsfrequenzen $f_i$ verwendet werden, die meisten der obigen Betrachtungen sind bereits entsprechend allgemein formuliert. Allerdings muss dann ein allgemeineres Maß dafür gefunden werden, um die Unterschiede der Amplituden $a_{f_i}$ zu bewerten. Ein solches allgemeineres Maß lässt sich natürlich dann auch für lediglich zwei Frequenzen anwenden.

Als beispielhafte Größe für drei Frequenzen und ganz analog auch mehr als drei Frequenzen kann

$$w := \frac{std(a_{f0}, a_{f1}, a_{f2})}{mean(a_{f0}, a_{f1}, a_{f2})}$$

berechnet werden, wobei mean den arithmetischen Mittelwert und std die Standardabweichung bezeichnet. Für nahe beieinanderliegende Amplituden $a_{f_i}$ ist der Wert w klein und verschwindet für einen idealen Einzeltreffer, dementsprechend wächst w für untereinander unterschiedliche Amplitudenwerte $a_{f_i}$ an. Es gibt aber auch andere Maßfunktionen als das genannte w, um zu beurteilen, ob die Amplitudenwerte $a_{f_i}$ nahe genug beieinanderliegen oder ob ein Kantentreffer vorliegt. Sowohl könnte für den Wert im Zähler ein anderes statistisches Streumaß verwendet werden, beispielsweise "Maximum minus Minimum", als auch für den Wert im Nenner ein anderes statistisches Lagemaß wie z.B. der Median.

Das jeweilige Ausmaß der Abweichung vom Wert für einen idealen Einzeltreffer, die mit einer der vorgestellten oder einer sonstigen Maßfunktion bewertet wird, kann als Güte- oder Verlässlichkeitsmaß für die Erkennung des Kantentreffers genutzt werden. Ein weiteres denkbares Kriterium für die Verlässlichkeit hängt von dem Absolutwert der Amplituden ab. Denn bei kleinen Absolutamplituden ist die Phasen- und Amplitudenmessung weniger genau, so dass Abweichungen eher rauschbedingt sein können.

Es ist möglich, eine bestimmte Verlässlichkeit zu fordern und damit binär einen Messwert als Kantentreffer beziehungsweise gültig zu bewerten. Ein abgestufter oder kontinuierlicher Verlässlichkeitswert, insbesondere normiert auf [0,1], kann aber ebenso nützlich sein. Damit werden dann beispielsweise Kantentreffer gefiltert, indem Messwerte, die mit zu hoher Wahrscheinlichkeit Kantentreffer waren, von der Weiterverarbeitung ausgeschlossen werden. Denkbar ist aber auch, Kantentreffer durchaus noch als Messwerte zu berücksichtigen, aber entsprechend ihrer Verlässlichkeit mit geringerem Gewicht. Damit tragen potentiell fehlerhafte Messwerte weniger stark zum Endergebnis bei, ohne sie gleich vollständig zu verwerfen.

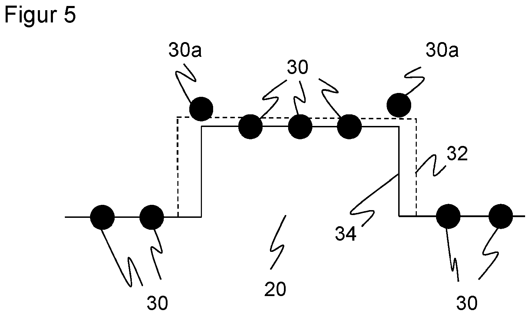

Figur 5 zeigt schematisch einige nacheinander angetastete Messpunkte 30 beispielsweise eines als Laserscanner ausgebildeten Sensors 10. Zu jedem Messpunkt 30 ist die laterale Lage beispielsweise als Winkel von dem Encoder des Laserscanners sowie die mit dem Phasenverfahren aus der Lichtlaufzeit bestimmte Entfernung bekannt. Während der Abtastung des Objekts 20 werden die jeweiligen Entfernungen gemessen, so dass die Kontur und insbesondere Höhe und Breite des Objekts 20 vermessen werden kann.

An den Objektkanten entstehen Kantentreffer, und deshalb sind die Messpunkte 30a mit einem systematischen Messfehler behaftet. Herkömmlich wäre die Kontur des Objekts 20 nun anhand der Abstandswerte bestimmt worden, wie mit gestrichelter Linie 32 gezeigt. Die Messpunkte 30a sind durch den Kantentreffer verfälscht, aber nicht so stark, dass sie allein deswegen als solche erkannt würden. Daher werden sie herkömmlich miteinbezogen und führen dazu, dass Höhe und Breite des Objekts 20 überschätzt werden.

Erfindungsgemäß werden die Kantentreffer 30a unabhängig vom zugehörigen Entfernungsmesswert mit dem oben beschriebenen Verfahren anhand ihrer Amplituden als Kantentreffer markiert. Damit ist die Winkelposition des Objekts 20 bereits ohne Betrachtung der gemessenen Entfernungen bekannt. Die Entfernungswerte zu den Kantentreffern 30a können aus der Nachbarschaft übernommen werden, da die mit den Kantentreffern 30a gemessenen Entfernungen nicht zuverlässig sind. Damit entsteht die mit durchgezogener Linie gezeigte Kontur 34, die das Objekt 20 genauer als herkömmlich wiedergibt. Dementsprechend wird auch die Höhen- und Breitenschätzung des Objektes 20 verbessert.

Es wurde bisher davon ausgegangen, dass die Modulationsfrequenzen $f_i$ künstliche Modulationsfrequenzen unabhängig von der Trägerfrequenz des Sendelichts 16 sind. Es ist alternativ denkbar, direkt die Lichtfeldstärke zu modulieren und damit mit der Trägerfrequenz selbst zu arbeiten. Dazu ist erforderlich, dass der Lichtsender 12 mindestens zwei unterschiedliche Lichtfrequenzen $f_i$ bereitstellt. Anstelle des bisher beschriebenen herkömmlichen Phasenverfahrens werden Phase und Amplitude nun in einem kohärenten Messverfahren beispielsweise in einem interferometrischen Aufbau direkt auf den Skalen der Lichtfrequenz bestimmt. Der inhärente Eindeutigkeitsbereich ist dann durch die sehr kleine Lichtwellenlänge bestimmt, was aber durch mehr Frequenzen $f_i$ oder andere Maßnahmen ausgeglichen werden kann. Der Vorteil ist, dass auch die Messgenauigkeit nun die Skala der Lichtwellenlängen erreichen kann.

Erfindungsgemäß werden Kantentreffer anhand der Amplituden erkannt. Es sind andere beziehungsweise ergänzende Kriterien denkbar. Die Messung in jeder Frequenz $f_i$ ergibt eine jeweilige Phase und damit eine Entfernung $d_i$ mit kleinem Eindeutigkeitsbereich. Um daraus einen gemeinsamen Abstandswert zu kombinieren, wird üblicherweise nach zu den gemessenen Entfernungen $d_i$ passenden ganzzahligen Kombinationen gesucht: Finde d und $m, n \in N_0$, so dass $d = d_0 + n \cdot \lambda_0 = d_1 + m \cdot \lambda_1$, wobei $\lambda_1$ und $\lambda_2$ die Wellenlängen zu den Frequenzen $f_0$ und $f_1$ bezeichnen. Es ist nun erweiternd denkbar, auch nach halbzahligen Verschiebungen zu suchen, d.h. $m, n \in \left\{ x + \frac{1}{2} \mid x \in N_0 \right\}$. Falls halbzahlige Ergebnisse besser passen als ganzzahlige, so deutet dies darauf hin, dass die gemessenen Phasenwerte von $f_0$ und $f_1$ nicht konsistent zueinander sind, was beispielsweise durch einen Kantentreffer verursacht sein könnte. Solche Kantentreffer können dann analog behandelt werden, oder das genannte Kriterium wird genutzt, um ein weiteres Mal darüber zu entscheiden, ob es sich um Kantentreffer handelt.

## Patentansprüche

1.    Optoelektronischer Sensor (10) zur Bestimmung der Entfernung eines Objekts (20) in einem Überwachungsbereich (18), wobei der Sensor (10) einen Lichtsender (12) zum Aussenden von Sendelicht (16), einen Lichtempfänger (26) zum Erzeugen eines Empfangssignals aus dem an dem Objekt (20) remittierten Sendelicht (22) sowie eine Steuer- und Auswertungseinheit (28) aufweist, die dafür ausgebildet ist, das Sendelicht (16) mit mindestens einer ersten Frequenz und einer zweiten Frequenz zu modulieren, einen Phasenversatz zwischen Sendelicht (16) und remittiertem Sendelicht (22) für die erste Frequenz und die zweite Frequenz und daraus eine Lichtlaufzeit sowie aus dem Empfangssignal eine erste Amplitude und eine zweite Amplitude für die erste und die zweite Frequenz zu bestimmen,
**dadurch gekennzeichnet,**
**dass** die Steuer- und Auswertungseinheit (28) weiterhin dafür ausgebildet ist, anhand einer Bewertung der ersten Amplitude und der zweiten Amplitude bei einem mehr als rauschbedingten Unterschied der Amplituden einen Kantentreffer zu erkennen und ein Objekt (20) im Überwachungsbereich (18) anhand eines erkannten Kantentreffers zu lokalisieren, wobei ein Kantentreffer bedeutet, dass das Sendelicht (16) jeweils mit einem Teilquerschnitt auf Objektflächen in unterschiedlichen Entfernungen fällt.

**2.** Sensor (10) nach Anspruch 1,
wobei die Steuer- und Auswertungseinheit (28) dafür ausgebildet ist, die Differenz der ersten Amplitude und der zweiten Amplitude mit einer Toleranzschwelle zu bewerten.

**3.** Sensor (10) nach Anspruch 1 oder 2,
wobei die Steuer- und Auswertungseinheit (28) dafür ausgebildet ist, das Verhältnis der ersten Amplitude und der zweiten Amplitude zu bewerten.

**4.** Sensor (10) nach einem der vorhergehenden Ansprüche,
wobei die Steuer- und Auswertungseinheit (28) dafür ausgebildet ist, einen Quotienten aus Standardabweichung und Mittelwert der Amplituden zu bewerten.

**5.** Sensor (10) nach einem der vorhergehenden Ansprüche,
wobei die Steuer- und Auswertungseinheit (28) dafür ausgebildet ist, einen Signifikanzwert für die Erkennung eines Kantentreffers zu bestimmen.

**6.** Sensor (10) nach einem der vorhergehenden Ansprüche,
wobei die Steuer- und Auswertungseinheit (28) dafür ausgebildet ist, Entfernungswerte zu Kantentreffern zu verwerfen oder mit einer Zusatzinformation auszugeben.

**7.** Sensor (10) nach Anspruch 5,
wobei die Zusatzinformation eine binäre Markierung als Kantentreffer oder ein Signifikanzwert ist.

**8.** Sensor (10) nach einem der vorhergehenden Ansprüche,
wobei die Steuer- und Auswertungseinheit (28) dafür ausgebildet ist, Phasenversatz und Amplituden durch eine IQ-Demodulation zu bestimmen.

**9.** Sensor (10) nach einem der vorhergehenden Ansprüche,
wobei die Steuer- und Auswertungseinheit (28) dafür ausgebildet ist, mit einer ersten Frequenz und zweiten Frequenz unabhängig von der Trägerfrequenz des Sendelichts (16) zu modulieren.

**10.** Sensor (10) nach einem der vorhergehenden Ansprüche,
der als Laserscanner mit einer beweglichen Ablenkeinheit zur periodischen Abtastung des Überwachungsbereichs (18) mit dem Sendelicht (16) sowie einer Winkelerfassungseinheit zur Bestimmung der jeweiligen Winkelstellung der Ablenkeinheit ausgebildet ist.

**11.** Verfahren zur Bestimmung der Entfernung eines Objekts (20) in einem Überwachungsbereich (18), wobei mit mindestens einer ersten Frequenz und einer zweiten Frequenz moduliertes Sendelicht (16) in den Überwachungsbereich (18) ausgesandt, ein Empfangssignal aus dem an dem Objekt (20) remittierten Sendelicht (22) erzeugt und ein jeweiliger Phasenversatz zwischen Sendelicht (16) und remittiertem Sendelicht (22) für die erste Frequenz und die zweite Frequenz und daraus eine Lichtlaufzeit sowie aus dem Empfangssignal eine erste Amplitude und eine zweite Amplitude für die erste und die zweite Frequenz bestimmt wird,
**dadurch gekennzeichnet,**
**dass** anhand einer Bewertung der ersten Amplitude und der zweiten Amplitude bei einem mehr als rauschbedingten Unterschied der Amplituden ein Kantentreffer erkannt wird, dass ein Objekt (20) im Überwachungsbereich (18) anhand eines erkannten Kantentreffers lokalisiert wird, wobei ein Kantentreffer bedeutet, dass das Sendelicht (16) jeweils mit einem Teilquerschnitt auf Objektflächen in unterschiedlichen Entfernungen fällt.

**Claims**

**1.** An optoelectronic sensor (10) for determining the distance of an object (20) in a monitoring area (18), the sensor (10) comprising a light transmitter (12) for transmitting transmitted light (16), a light receiver (26) for generating a received signal from remitted light (22) that is remitted at the object (20), and a control and evaluation unit (28) configured to modulate the transmitted light (16) with at least a first frequency and a second frequency, to determine a phase offset between the transmitted light (16) and the remitted light (22) for the first frequency and the second frequency and, from this, to determine a light time of flight and, from the received signal, a first amplitude and a second amplitude for the first and the second frequencies,
**characterized in that** the control and evaluation unit (28) is further configured to detect an edge hit by means of an evaluation of the first amplitude and the second amplitude in the event of a difference in the amplitudes that is larger than due to noise, and to localize an object (20) in the monitoring area (18) on the basis of a detected edge hit, an edge hit meaning that the transmitted light (16) is incident with a respective partial cross section on object surfaces at different distances.

**2.** The sensor (10) according to claim 1,
wherein the control and evaluation unit (28) is configured to evaluate the difference of the first amplitude and the second amplitude with a tolerance threshold.

3. The sensor (10) according to claim 1 or 2, wherein the control and evaluation unit (28) is configured to evaluate the ratio of the first amplitude and the second amplitude.

4. The sensor (10) according to any of the preceding claims, wherein the control and evaluation unit (28) is configured to evaluate a quotient of standard deviation and mean value of the amplitudes.

5. The sensor (10) according to any of the preceding claims, wherein the control and evaluation unit (28) is configured to determine a significance value for the detection of an edge hit.

6. The sensor (10) according to any of the preceding claims, wherein the control and evaluation unit (28) is configured to discard distance values for edge hits or to output them with additional information.

7. The sensor (10) according to claim 6, wherein the additional information is a binary mark as an edge hit, or a significance value.

8. The sensor (10) according to any of the preceding claims, wherein the control and evaluation unit (28) is configured to determine phase offset and amplitudes by IQ demodulation.

9. The sensor (10) according to any of the preceding claims, wherein the control and evaluation unit (28) is configured to modulate with a first frequency and second frequency independently of the carrier frequency of the transmitted light (16).

10. The sensor (10) according to any of the preceding claims, that is configured as a laser scanner having a movable deflection unit for periodically scanning the monitoring area (18) with the transmitted light (16) and an angle detection unit for determining the respective angular position of the deflection unit.

11. A method for determining the distance of an object (20) in a monitoring area (18), wherein transmitted light (16) modulated with at least a first frequency and a second frequency is transmitted into the monitoring area (18), a received signal is generated from the remitted light (22) remitted at the object (20), and a respective phase offset between transmitted light (16) and remitted light (22) is determined for the first frequency and the second frequency, and a light time of flight is determined from that, and a first amplitude and a second amplitude for the first and the second frequency are determined from the received signal, **characterized in that** an edge hit is detected on the basis of an evaluation of the first amplitude and the second amplitude in the event of a difference in the amplitudes that is larger than due to noise, and **in that** an object (20) in the monitoring region (18) is localized on the basis of a detected edge hit, an edge hit meaning that the transmitted light (16) is incident with a respective partial cross section on object surfaces at different distances.

## Revendications

1. Capteur optoélectronique (10) pour déterminer la distance d'un objet (20) dans une zone à surveiller (18), le capteur (10) comprenant un émetteur de lumière (12) pour émettre une lumière d'émission (16), un récepteur de lumière (26) pour générer un signal de réception à partir de la lumière d'émission (22) renvoyée de l'objet (20), et une unité de commande et d'évaluation (28) qui est réalisée pour moduler la lumière d'émission (16) avec au moins une première fréquence et une seconde fréquence, pour déterminer un déphasage entre la lumière d'émission (16) et la lumière d'émission renvoyée (22) pour la première fréquence et la seconde fréquence, et pour déterminer, à partir dudit déphasage, un temps de vol de lumière, ainsi que, à partir du signal de réception, une première amplitude et une seconde amplitude pour les première et seconde fréquences, **caractérisé en ce que** l'unité de commande et d'évaluation (28) est en outre réalisée pour reconnaître un impact de bord sur la base d'une évaluation de la première amplitude et de la seconde amplitude, en cas de différence des amplitudes supérieure à celle due au bruit, et pour localiser un objet (20) dans la zone à surveiller (18) sur la base d'un impact de bord reconnu, un impact de bord signifiant que la lumière d'émission (16) tombe avec une section transversale partielle respective sur des surfaces d'objet à des distances différentes.

2. Capteur (10) selon la revendication 1, dans lequel l'unité de commande et d'évaluation (28) est réalisée pour évaluer la différence de la première amplitude et de la seconde amplitude avec un seuil de tolérance.

3. Capteur (10) selon la revendication 1 ou 2, dans lequel l'unité de commande et d'évaluation (28) est réalisée pour évaluer le rapport de la première amplitude et de la seconde amplitude.

4. Capteur (10) selon l'une des revendications précédentes,
dans lequel l'unité de commande et d'évaluation (28) est réalisée pour évaluer un quotient de l'écart type et de la valeur moyenne des amplitudes.

5. Capteur (10) selon l'une des revendications précédentes,
dans lequel l'unité de commande et d'évaluation (28) est réalisée pour déterminer une valeur de signification pour reconnaître un impact de bord.

6. Capteur (10) selon l'une des revendications précédentes,
dans lequel l'unité de commande et d'évaluation (28) est réalisée pour rejeter des valeurs de distance relatives à des impacts de bord ou pour les émettre avec une information supplémentaire.

7. Capteur (10) selon la revendication 5,
dans lequel l'information supplémentaire est un marquage binaire à titre d'impact de bord ou une valeur de signification.

8. Capteur (10) selon l'une des revendications précédentes,
dans lequel l'unité de commande et d'évaluation (28) est réalisée pour déterminer le déphasage et les amplitudes par une démodulation IQ.

9. Capteur (10) selon l'une des revendications précédentes,
dans lequel l'unité de commande et d'évaluation (28) est réalisée pour moduler avec une première fréquence et une seconde fréquence, indépendamment de la fréquence porteuse de la lumière d'émission (16).

10. Capteur (10) selon l'une des revendications précédentes,
qui est réalisé sous forme de scanner laser ayant une unité de déviation mobile pour balayer périodiquement la zone à surveiller (18) avec la lumière d'émission (16), et une unité de détection d'angle pour déterminer la position angulaire respective de l'unité de déviation.

11. Procédé pour déterminer la distance d'un objet (20) dans une zone à surveiller (18), dans lequel une lumière d'émission (16) modulée avec au moins une première fréquence et une seconde fréquence est émise dans la zone à surveiller (18), un signal de réception est généré à partir de la lumière d'émission (22) renvoyée de l'objet (20) et un déphasage respectif entre la lumière d'émission (16) et la lumière d'émission renvoyée (22) est déterminé pour la première fréquence et pour la seconde fréquence, un temps de vol de la lumière est déterminé à partir dudit déphasage, et une première amplitude et une seconde amplitude pour la première et la seconde fréquence sont en outre déterminées à partir du signal de réception, **caractérisé en ce que**

sur la base d'une évaluation de la première amplitude et de la seconde amplitude, un impact de bord est reconnu en cas de différence des amplitudes supérieure à celle due au bruit, **en ce qu'**un objet (20) dans la zone à surveiller (18) est localisé sur la base d'un impact de bord reconnu, un impact de bord signifiant que la lumière d'émission (16) tombe avec une section transversale partielle respective sur des surfaces d'objet à des distances différentes.

**Figur 1**

**Figur 2**

Figur 3a

Figur 3b

Figur 4a

Figur 4b

$f_0$

$f_1$

Figur 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19757849 B4
- US 20180210070 A1
- US 5216236 A
- US 20070103699 A1